# NEUE EUROPÄISCHE PATENTSCHRIFT

(11) **EP 2 832 205 B2**
(45) Veröffentlichungstag und Bekanntmachung des Hinweises auf die Entscheidung über den Einspruch: **14.10.2020**
(45) Hinweis auf die Patenterteilung: 27.12.2017
(21) Anmeldenummer: 14167006.7
(22) Anmeldetag: 05.05.2014
(51) Int. Cl.: A01D 41/127, A01D 43/08

(54) **Selbstfahrende Erntemaschine**
Self-propelled harvester
Moissonneuse automotrice

(30) Priorität: 31.07.2013 DE 102013108208
(43) Veröffentlichungstag der Anmeldung: 04.02.2015
(73) Patentinhaber: CLAAS Selbstfahrende Erntemaschinen GmbH, 33428 Harsewinkel (DE)
(72) Erfinder: Bönig Dr., Ingo, 33330 Gütersloh (DE); Kriebel, Bastian, 48155 Münster (DE); Cord-Kruse, Christian, 48231 Warendorf (DE); Hohm, Robert, 48231 Warendorf (DE); Hugenroth, Ludger, 33428 Harsewinkel (DE)
(74) Vertreter: CLAAS Gruppe

(56) Entgegenhaltungen:
- EP-A1- 1 609 349
- EP-A1- 2 591 659
- EP-A2- 1 051 898
- EP-A2- 2 112 357
- EP-A2- 2 112 357
- WO-A1-2011/026807
- WO-A1-2011/026807
- DE-A1- 3 810 724
- DE-A1-102007 004 576
- DE-A1-102008 036 378
- DE-A1-102008 036 378
- DE-A1-102009 029 559
- US-A- 4 487 002

## Beschreibung

Die vorliegende Erfindung betrifft eine selbstfahrende Erntemaschine gemäß dem Oberbegriff von Anspruch 1. Eine derartige Erntemaschine ist aus DE 102008036378 bekannt. Aus dem Stand der Technik ist es bekannt, selbstfahrende Erntemaschinen, zu denen insbesondere Mähdrescher und Feldhäcksler zählen, mit einem Vorfahrtregler auszustatten, welcher Vorfahrtregler durch die Ansteuerung eines Fahrreglers im engeren Sinne die Fahrgeschwindigkeit der Erntemaschine regelt. Dem Fahrregler im engeren Sinne wird - entweder manuell oder wie hier vom Vorfahrtregler - eine Fahrgeschwindigkeit vorgegeben, auf welche der Antrieb der Erntemaschine dann geregelt wird. Dabei wird die Leistung sowohl für den Antrieb der Erntemaschine als auch für den Betrieb der Arbeitsorgane, mit denen das Erntegut verarbeitet wird, von einem Antriebsmotor bereitgestellt, bei welchem es sich regelmäßig um einen Verbrennungsmotor und insbesondere um einen Dieselmotor handelt. Je nach Fahrgeschwindigkeit der Erntemaschine sowie der aktuellen Dichte des Erntebestandes im Feld ergibt sich ein unterschiedlicher, von der Erntemaschine aufgenommener Erntedurchsatz, welcher von den Arbeitsorganen entsprechend verarbeitet werden muss. Mit der Veränderung der Fahrgeschwindigkeit und des aktuellen Erntedurchsatzes können sich folglich auch die Anforderungen an die von dem Antriebsmotor bereitgestellte Leistung und das von ihm bereitgestellte Drehmoment verändern.

Aus dem Stand der Technik sind verschiedene Ansätze bekannt, diese miteinander zusammenhängenden Größen bei einer selbstfahrenden Erntemaschine auf vorteilhafte Weise einzustellen.

Bei einem ersten bekannten Ansatz wird der Antriebsmotor auf einer Volllastkennlinie betrieben. Die Volllastkennlinie eines Verbrennungsmotors gibt das abgegebene Drehmoment des Verbrennungsmotors über der Drehzahl bei dem höchstmöglichen Lastwert an, welcher einer uneingeschränkten Energiezufuhr bzw. im Falle des Verbrennungsmotors einer maximalen Kraftstoffzufuhr entspricht und definiert auf diese Weise Betriebspunkte des Verbrennungsmotors mit Volllast. Aus dem Drehmoment und der entsprechenden Drehzahl lässt sich ohne Weiteres auch die von dem Motor abgegebene Leistung des Betriebspunktes ermitteln. Es kann eine Volllastkennlinie - mit demselben Informationsgehalt - grundsätzlich auch die abgegebene Leistung über der Drehzahl angeben. Hier und nachfolgend betrifft jede solche Kennlinie das Drehmoment über der Drehzahl.

Neben der Volllastkennlinie kann auch für jede Teillast des Motors, entsprechend einem jeweiligen Teillastwert, eine entsprechende Teillastkennlinie definiert werden. Eine Teillast bedeutet hier, dass der Motor nicht etwa mit einer maximalen Kraftstoffzufuhr arbeitet, wie im Fall der Volllast, sondern die Kraftstoff- bzw. Energiezufuhr begrenzt und damit gedrosselt wird. Ein aus dem Bereich der Personenkraftwagen bekannter, beispielhafter Weg um dies zu erreichen, besteht in der Verwendung einer Drosselklappe. Hier sind auch weitere Lösungen möglich, auf deren Ausgestaltungen es im Einzelnen hier aber nicht ankommt.

Die einem solchen Teillastwert entsprechende Kennlinie definiert ebenfalls Betriebspunkte über der Drehzahl, wobei das dem Betriebspunkt entsprechende Drehmoment der Teillastkennlinie niedriger als das der Volllastkennlinie für die gleiche Drehzahl ist. Auf diese Weise lässt sich für einen Verbrennungsmotor neben der besagten Volllastkennlinie eine im Prinzip unbegrenzte Anzahl von Teillastkennlinien definieren, wobei wie beschrieben jede Teillastkennlinie einem speziellen Teillastwert, welcher auch als prozentualer Anteil bzw. Bruchteil der Volllast angegeben werden kann, entspricht. Hier und nachfolgend umfasst der Begriff der Teillastkennlinien auch die Volllastkennlinie als Teillastkennlinie der Volllast. Ihre Gesamtheit kann für einen Verbrennungsmotor auch als Motorkennfeld dieses Verbrennungsmotors bezeichnet werden. Dieses Motorkennfeld kann ferner noch von weiteren sekundären Parametern oder Randbedingungen wie etwa einer Temperatur des Verbrennungsmotors etc. abhängig sein, welche bei einer Steuerung oder Regelung des Verbrennungsmotors auch berücksichtigt werden können. Der Vereinfachung halber werden diese Effekte allerdings im vorliegenden Kontext ausgeklammert.

Die aus dem Stand der Technik bekannte Fahrstrategie sieht nun vor, dass der Verbrennungsmotor der Erntemaschine stets mit Volllast und damit auf der Volllastkennlinie betrieben wird. Typischerweise steigt das Drehmoment der Volllastkennlinie bis zu einer bestimmten Drehzahl, bleibt dann in einem weiteren Drehzahlbereich konstant, um dann mit zunehmender Drehzahl wieder abzusinken. Da die abgegebene Leistung des Verbrennungsmotors sich aus einem Produkt des Drehmoments mit der Drehzahl ergibt, steigt die Leistung in einem bestimmten Bereich noch mit zunehmender Drehzahl, auch wenn das Drehmoment in diesen Bereich mit zunehmender Drehzahl abnimmt. In der Regel wird der Antriebsmotor in dem Drehzahlbereich jenseits des maximalen Drehmomentwertes betrieben, sodass das abgegebene Drehmoment mit abnehmender Drehzahl steigt und und mit zunehmender Drehzahl sinkt. Das hat den Vorteil, dass bei einer plötzlich auftretenden Steigerung der Arbeitsbelastung des Motors, entsprechend einem größeren Gegen-Drehmoment, der Motor nicht abgewürgt wird, sondern die Drehzahl nur so weit verringert wird, bis der höhere erforderliche Drehmomentwert erreicht wird.

Die bekannte Fahrstrategie sieht nun vor, dass der Verbrennungsmotor auf der Volllastkennlinie betrieben wird und der Vorfahrtregler mittels des bereits genannten Fahrreglers die Erntemaschine so auf eine - variable - Fahrgeschwindigkeit einstellt, dass die von dem Verbrennungsmotor aufgenommene Leistung konstant gehalten wird. Relevante Verbraucher der Motorleistung sind der Antrieb der Erntemaschine sowie die Arbeitsorgane. In einem Feldbereich mit einem dichten Bestand wird dann schon bei relativ niedriger Fahrgeschwindigkeit ein hoher Erntedurchsatz erreicht, was wiederum - wenn etwa kein Getriebe mit einem veränderlichen Übersetzungsverhältnis zwischen dem Verbrennungsmotor und den Arbeitsorganen vorgesehen ist - die Abgabe eines hohen Drehmoments vom Antriebsmotor an die Arbeitsorgane erfordert. Dies führt zu einer hohen Motordrückung, d. h. zu einer Drehzahlreduzierung des Verbrennungsmotors bis knapp oberhalb des Bereichs des maximalen Drehmoments. Ein Betrieb des Verbrennungsmotors in einem solchen Betriebspunkt hat den Vorteil, dass er sehr effizient im Hinblick auf einen Kraftstoffverbrauch ist. Wenn nun der Bereich mit dem dichten Feldbestand verlassen und ein Abschnitt mit einem dünneren Feldbestand befahren wird, befindet sich der Verbrennungsmotor zunächst in einem Betriebspunkt, wo mehr Drehmoment abgegeben wird, als aktuell erforderlich ist. Dies führt dazu, dass die Drehzahl des Motors sich erhöht, bis ein entsprechend geringerer Drehmomentwert erreicht wird. Der neue Betriebspunkt mit niedrigerem Drehmoment aber höherer Drehzahl - und also mit einer geringeren Motordrückung - ist nicht so effizient wie der Betriebspunkt, welcher sich bei der Durchfahrt des dichten Feldbestands eingestellt hatte.

Um nun die Effizienz im Betrieb auch beim Durchfahren von Bereichen mit unterschiedlicher Bestandsdichte gleichbleibend zu optimieren, wird im Stand der Technik und speziell in der DE 10 2008 036 378 A1 ein Verfahren zur stufenweisen Schaltung zwischen Teillast-Kennlinien vorgeschlagen, bei denen der Antriebsmotor immer nahe an einer optimalen Drehzahl gehalten werden soll. Diese optimale Drehzahl wird für jeden Motor spezifisch ermittelt und unveränderlich angenommen. Bei diesem Verfahren arbeitet der Vorfahrtregler als Tempomat, indem er eine konstante Fahrgeschwindigkeit festlegt. Bei Erreichen eines Gebietes mit einem dünneren Feldbestand, was etwa durch das Überschreiten einer oberen Grenzdrehzahl durch den Antriebsmotor aus dem oben beschriebenen Effekt wahrgenommen werden kann, wird in einen niedrigeren Teillastwert geschaltet. Das führt zu einer Verringerung des abgegebenen Drehmoments bei der aktuellen Drehzahl, sodass diese sich reduziert. Der Teillastwert wird so lange gesenkt, bis der Betriebspunkt unter der besagten oberen Grenzdrehzahl liegt. Das Erhöhen oder Absenken des Teillastwerts bei Erreichen von jeweiligen oberen und unteren Grenzdrehzahlen führt also dazu, dass die Drehzahl des Betriebspunktes sich zwischen den Grenzdrehzahlen einpendelt, welche wiederum so bestimmt sind, dass sie die genannte, aus Effizienzgründen optimale Drehzahl ergeben. Andere bekannte Fahrstrategien sehen vor, dass durch den Vorfahrtregler entweder eine Motorauslastung oder der Erntedurchsatz konstant gehalten wird.

Nachteilig an dem obigen Stand der Technik ist jedoch einerseits, dass durch die konstante Fahrgeschwindigkeit der Erntemaschine der Durchsatz, nämlich in Abhängigkeit der Bestandsdichte, stark schwanken kann. Ferner führt der Betrieb des Verbrennungsmotors bei oder nahe der Drehzahl der maximalen Effizienz zu häufig notwendigen Veränderungen des Teillastwerts des Motors, welche sowohl vom Bediener als Unruhe im Motorlauf negativ wahrgenommen werden als auch zu einem erhöhten Verschleiß der Erntemaschine bzw. ihrer Arbeitsorgane führen. Die Notwendigkeit häufiger Veränderungen des Teillastwerts ergibt sich daraus, dass die durch die Veränderung der Bestandsdichte des Ernteguts im Feldbestand begründete Erhöhung des von dem Verbrennungsmotor geforderten Drehmoments nicht durch eine entsprechende Verringerung der Drehzahl kompensiert werden kann, da bei der maximal effizienten Drehzahl, auf welche ja geregelt wurde, das maximale Drehmoment im Wesentlichen schon erreicht ist. Daher muss in so einer Situation also in Richtung einer Volllast "geschaltet" werden, um ein Abwürgen des Motors zu verhindern. Eine darauf wieder eintretende Verringerung der Bestandsdichte führt entsprechend, zur Verhinderung einer ineffizient hohen Drehzahl, zu einer korrespondierenden Verringerung des Teillastwertes, also einem "Zurückschalten". Je nachdem wie homogen oder inhomogen der Feldbestand ist, können solche Lastwechsel häufig auftreten.

Die Aufgabe der Erfindung besteht also darin, die bekannte selbstfahrende Erntemaschine derart auszugestalten und weiterzubilden, dass der Bediener sowohl eine feste Ernteleistung vorgeben kann, als auch die Möglichkeit hat, gegenüber einem streng auf Effizienz optimierten Betrieb wahlweise eine gewisse Reserve gegenüber den besagten Schwankungen des erforderlichen Drehmoments vorzusehen, um notwendige Veränderungen des Teillastwertes zu verringern.

Das genannte Problem wird bei einer selbstfahrenden Erntemaschine mit den Merkmalen des Oberbegriffs von Anspruch 1 durch die Merkmale des kennzeichnenden Teils von Anspruch 1 gelöst.

Wesentlich ist die Erkenntnis, dass eine Regelung der Motoreinrichtung - also etwa des Antriebsmotors - der Erntemaschine nicht so eingestellt werden muss, dass sie zwangsläufig eine feste, motorspezifische, möglichst effiziente und damit niedrige Drehzahl anstrebt. Vielmehr kann dem Bediener die Möglichkeit gegeben werden, einen gewünschten Betriebspunkt im Motorkennfeld der Motoreinrichtung, welches Motorkennfeld wie festgestellt durch die Gesamtheit der Teillastkennlinien und der Volllastkennlinie definiert wird, direkt oder indirekt einstellen zu lassen. Die grundsätzlich zwei vorhandenen Freiheitsgrade erlauben es dem Bediener, eine Soll-Motordrehzahl sowie einen Soll-Ertragswert vorzugeben, wobei der Soll-Ertragswert auf unterschiedliche Größen bezogen sein kann, welche aber in einem bestimmten Zusammenhang zu einer Arbeitsleistung der Erntemaschine stehen. Auf diese Weise kann sowohl ein bestimmter, gleichmäßiger Erntedurchsatz vorgegeben, als auch, falls gewünscht, eine Drehmoment-Reserve für eine konstante Fahrt vorgesehen werden. Der Bediener kann also sowohl selbst einstellen, wie viel Erntedurchsatz erzielt werden soll, was sich etwa aus organisatorischen, wirtschaftlichen oder logistischen Erwägungen begründen kann, als auch berücksichtigen, mit wie viel Inhomogenität der Bestandsdichte er im Feldbestand rechnet und darauf basierend einen Puffer vorsehen, in welchem die Drehzahl der Motoreinrichtung noch gedrückt werden kann, ohne dass eine Erhöhung des Teillastwerts erforderlich wird.

Gemäß den Vorgaben des Bedieners ergibt sich also ein Betriebspunkt der Motoreinrichtung der Erntemaschine, welcher regelmäßig nicht auf der Volllastkennlinie liegt, wobei dann eine Regeleinrichtung der Erntemaschine die Motoreinrichtung, sowie eine Leistungsanordnung mit Arbeitsorganen und einem Vortriebssystem so ansteuert, dass dieser Betriebspunkt eingestellt bleibt.

Die bevorzugten Ausgestaltungen der Ansprüche 4 bis 6 betreffen nun bevorzugte Herangehensweisen, den besagten Betriebspunkt ausgehend von bekannten Drehmomentkennlinien der Motoreinrichtung zu bestimmen.

Der bevorzugte Gegenstand des Anspruchs 7 betrifft den Fall, dass der vom Bediener vorgegebene Soll-Ertragswert eine bestimmte Soll-Motorleistung ist.

Die bevorzugte Ausgestaltung nach Anspruch 9 wiederum betrifft den Fall, dass der vom Bediener vorgegebene Soll-Ertragswert ein bestimmter Soll-Erntedurchsatz ist.

Die bevorzugte Weiterbildung dieser Ausgestaltung gemäß dem Anspruch 10 sieht nun vor, dass der Betriebspunkt wiederum über einen Teillastwert und einer entsprechenden Drehmomentkennlinie bestimmt wird, wobei wie hier von Anspruch 11 gefordert, zusätzlich das sich aus dem Soll-Erntedurchsatz abgeleitete Mindest-Drehmoment in die Bestimmung einfließt.

Dabei kann, wie die Ansprüche 12 und 13 feststellen, die Zuordnung zwischen dem Erntedurchsatz und dem erforderlichen Mindest-Drehmoment auch das Verwenden einer Adaptionszuordnung umfassen, welche etwa als Adaptionstabelle ausgebildet sein kann und dabei auch verschiedene andere Variablen berücksichtigen kann wie etwa Parametereinstellungen und äußere Randbedingungen des Feldes und der Umgebung.

Schließlich beschreiben die Ansprüche 14 und 15 den Fall, dass eine iterative Einstellung des Teillastwerts um eine vom Benutzer vorgegebene Soll-Motordrehzahl zu dem Erreichen eines Gleichgewichtszustands in einem Betriebspunkt führt.

Weitere Einzelheiten, Merkmale, Ziele und Vorteile der vorliegenden Erfindung werden nachfolgend anhand der Zeichnung eines bevorzugten Ausführungsbeispiels näher erläutert. In der Zeichnung zeigt
- Fig. 1: eine schematische Seitenansicht eines Feldhäckslers als vorschlagsgemäße selbstfahrende Erntemaschine,
- Fig. 2: eine Volllastkennlinie sowie weitere Drehmomentkennlinien der Motoreinrichtung der Erntemaschine aus Fig. 1 und
- Fig. 3: eine Adaptionstabelle für die vorschlagsgemäße Erntemaschine der Fig. 1 zum Bestimmen eines Mindest-Drehmoments abhängig von einer gemessenen Schichthöhe.

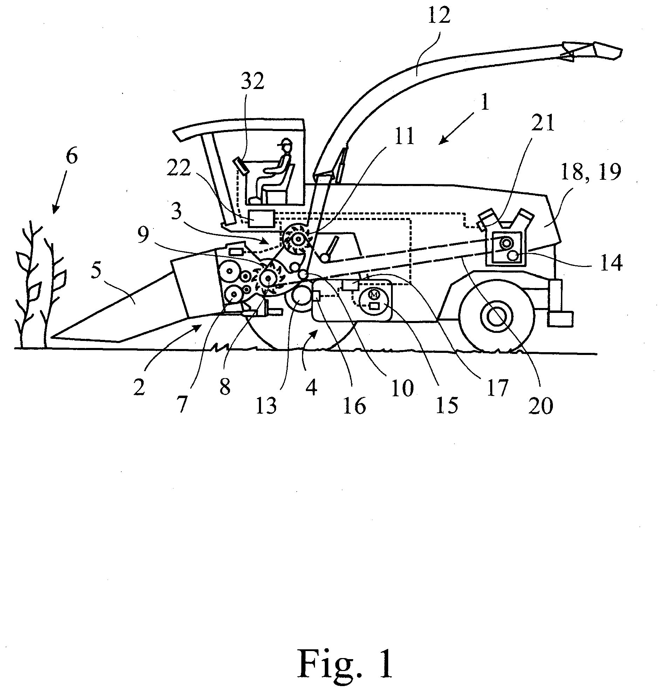

Die in der Fig. 1 dargestellte selbstfahrende Erntemaschine, bei der es sich hier beispielhaft um einen Feldhäcksler 1 handelt, umfasst vorschlagsgemäß eine Leistungsanordnung 2 mit Arbeitsorganen 3 und einem Vortriebsystem 4.

Zu den Arbeitsorganen 3 in diesem Sinne zählt ein frontseitig in Fahrtrichtung angeordnetes Vorsatzgerät 5 zum Aufnehmen des Ernteguts 6 im Erntebetrieb des Feldhäckslers 1. Dieses Erntegut 6 wird den nachfolgenden Einzugs- und Vorpresswalzen 7 zugeführt, welche es der rotierenden Häckseltrommel 8 zuleiten. Die Häckseltrommel 8 weist umlaufende Häckselmesser 9 zum Zerkleinern des Ernteguts 6 an einer - hier nicht dargestellten - Gegenschneide auf. Von da aus wird das Erntegut 6 an eine Nachzerkleinerungseinrichtung 10 übergeben und das somit zerkleinerte Erntegut 6 mittels eines Nachbeschleunigers 11 über einen Auswurfkrümmer 12 auf eine weitere Transportvorrichtung gefördert, welche hier allerdings nicht abgebildet ist. Die genannten Vorrichtungen sind ebenfalls von den Arbeitsorganen 3 im vorliegenden Sinne umfasst.

Das Vortriebssystem 4, welches die Vorderachse 13 der Erntemaschine antreibt, umfasst eine Hydraulikpumpe 14, welche über nicht dargestellte Hydraulikleitungen eine Fahrantriebsleistung an einen Hydraulikmotor 15 überträgt. Dabei kann zur Festlegung einer Fahrgeschwindigkeit der Erntemaschine ein von der Hydraulikpumpe 14 gelieferter Volumenstrom und, in einem ggf. erforderlichen zweiten Schritt, ein Schluckvolumen des Hydraulikmotors 15 eingestellt werden. Ein Sensor 16 ermittelt dabei die aktuelle Fahrgeschwindigkeit. Eine Hydrauliksteuerung 17 übernimmt die entsprechende Ansteuerung und bildet hier einen Fahrregler im obigen Sinne. Andere Ausgestaltungen des Vortriebssystems 4 mit einer einstellbaren Fahrgeschwindigkeit sind denkbar, ohne dass es auf diesbezügliche Einzelheiten ankäme.

Vorschlagsgemäß umfasst die Erntemaschine ferner eine Motoreinrichtung 18 zum Treiben der Leistungsanordnung 2, welche Motoreinrichtung 18 hier als Dieselmotor 19 ausgeführt ist. Der Dieselmotor 19 ist über einen Antriebsriemen 20 mit der Häckseltrommel 8 und dem Nachbeschleuniger 11 verbunden. Daneben werden auch auf grundsätzlich bekannte, hier allerdings nicht dargestellte Art und Weise, das Vorsatzgerät 5, die der Häckseltrommel 8 vorgeordneten Vorpresswalzen 7 und die Nachzerkleinerungseinrichtung 10 von der Motoreinrichtung 18 über den Antriebsriemen 20 angetrieben. Daneben treibt die Motoreinrichtung 18 über ein nicht dargestelltes Nebengetriebe die bereits beschriebene Hydraulikpumpe 14. Die Motoreinheit 18 umfasst schließlich einen Motorregler 21 zur Erfassung einer Drehzahl der Motoreinheit 18 und zum Einstellen eines Teillastwerts nach der obenstehenden Definition.

Die Motoreinrichtung 18 kann auch mehrere Dieselmotoren umfassen. Abweichend von dem hier dargestellten Ausführungsbeispiel, bei welchem der Antriebsriemen 20 als Bestandteil der Leistungsanordnung 2 die Leistung der Motoreinrichtung 18 auf die Arbeitsorgane 3 überträgt, kann auch ein nicht dargestelltes, insbesondere verstellbares Getriebe zwischen der Motoreinrichtung 18 und den Arbeitsorganen 3 vorhanden sein. Vorliegend ist ein solches Getriebe durch den Hydraulikmotor 15 lediglich für das Vortriebsystem 4 verwirklicht.

Vorschlagsgemäß umfasst die Erntemaschine ferner eine Regeleinrichtung 22 zum Ansteuern der Leistungsanordnung 2 und der Motoreinrichtung 18, wobei die Motoreinrichtung 18 in einem durch einen Teillastwert und einer Motordrehzahl definierbaren Betriebspunkt 23 arbeitet. Diese Regeleinrichtung 22 kann auch ein Vorfahrtregler sein oder einen solchen umfassen. Die Regeleinrichtung 22 weist einen Durchsatzsensor 22a zur Messung des aktuellen Erntedurchsatzes auf, welcher Durchsatzsensor 22a in der Nähe der Einzugs- und Vorpresswalzen 7 angeordnet ist.

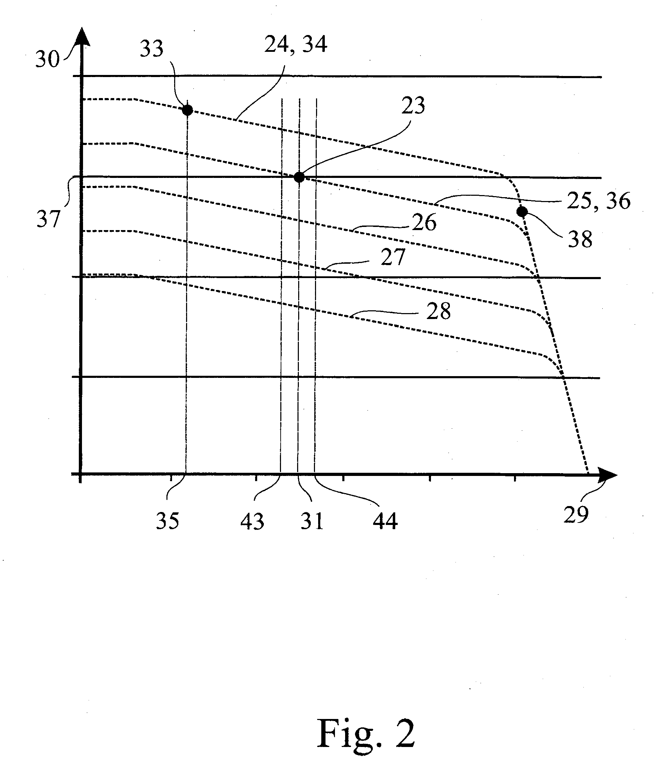

Wie bereits festgestellt, entspricht jedem Teillastwert eine Teillastkennlinie des Drehmoments. In der Fig. 2 ist das Motorkennfeld der Motoreinrichtung 18 mit der Volllastkennlinie 24 und vier beispielhaften Teillastkennlinien 25-28 dargestellt, denen jeweils ein charakterisierender Teillastwert zugeordnet ist. Dies ist genau derjenige Teillastwert, dessen Einstellung an der Motoreinrichtung 18 zu der betreffenden Teillastkennlinie 25-28 führt. In der Fig. 2 gibt die x-Achse 29 die Drehzahl und die y-Achse 30 das Drehmoment des entsprechenden Betriebspunktes an. Die Teillastwerte der Teillastkennlinien 25-28 nehmen mit sinkendem Drehmoment - also vertikalem Versatz nach unten - ab. Erkennbar liegt der Betriebspunkt 23 auf der Teillastkennlinie 25.

Vorschlagsgemäß ist nun vorgesehen, dass die Regeleinrichtung 22 die Motoreinrichtung 18 und die Leistungsanordnung 2 ansteuert, um die Motoreinrichtung 18 auf den Betriebspunkt 23 mit einer Soll-Motordrehzahl 31 und eine Ertragsgröße der Erntemaschine auf einen Soll-Ertragswert zu regeln.

Es wird also der Regeleinrichtung 22 sowohl die Soll-Motordrehzahl 31 als auch der Soll-Ertragswert der betreffenden Ertragsgröße vorgegeben. Beide Werte können einerseits manuell und direkt von einem Bediener, etwa über eine Bedienvorrichtung 32, angegeben und der Regeleinrichtung 22 zugeführt worden sein. Die Soll-Motordrehzahl 31 und der Soll-Ertragswert können sich aber auch in einer nicht unter den Schutzbereich fallenden Ausführungsform als Ergebnis einer vorgelagerten Berechnung oder Regelung ergeben, welche vorgelagerte Berechnung entweder in der Regeleinrichtung 22 oder in einer separaten, hier nicht dargestellten Rechenvorrichtung stattfinden kann. Hierbei kann es sich etwa um eine auf einem Hof-PC oder einem vergleichbaren Rechner ablaufende, landwirtschaftliche Wirtschafts- oder Ernteplanungssoftware handeln, deren Ergebnisse dann beispielsweise über eine drahtlose Verbindung an die Regeleinrichtung 22 übertragen werden.

Die Soll-Motordrehzahl bestimmt nun den Betriebspunkt 23 der Motoreinrichtung 18 unmittelbar in ersichtlicher Weise als Drehzahl des Betriebspunktes 23. Die nicht auf diese Weise den Betriebspunkt 23 unmittelbar definierende Ertragsgröße bzw. der entsprechende Soll-Ertragswert kann nun wiederum eine beliebige Größe sein, welche eine abgegebene Leistung - im nicht nur physikalischen Sinne - oder einen Ertrag der Erntemaschine in irgendeiner Form quantisiert. In Kombination mit der Soll-Motordrehzahl 31 ergibt sich eine direkte oder indirekte Bestimmung eines Teillastwerts, welcher durch die entsprechende Teillastkennlinie, hier beispielhaft die Teillastkennlinie 25, zusammen mit der Soll-Motordrehzahl 31 den Betriebspunkt 23 eindeutig definiert. Bevorzugte Ausgestaltungen einer solchen Ertragsgröße und mögliche Ansätze, auf dieser Grundlage einen Teillastwert zu bestimmen, werden unten stehend ausführlicher beschrieben.

Regelmäßig wird die Ertragsgröße wesentlich abhängig von der Fahrgeschwindigkeit der Erntemaschine sein, wie noch an speziellen Beispielen gezeigt werden wird. Daher ist es bevorzugt, dass die Regeleinrichtung 22 die Leistungsanordnung 2 ansteuert, um die Fahrgeschwindigkeit der Erntemaschine so einzustellen, dass die Motoreinrichtung 18 auf den Betriebspunkt 23 und die Ertragsgröße auf den Soll-Ertragswert geregelt wird.

Die grundlegende Stellgröße der Motoreinrichtung 18 ist der Teillastwert, eingestellt etwa über den Motorregler 21. Bei einer bestimmten Einstellung des Teillastwerts ergibt sich die Drehzahl aus dem Drehmoment, das die Motoreinrichtung 18 aktuell aufbringen muss. Wie bereits erklärt, bedeutet aber jede Änderung des Teillastwerts eine Unregelmäßigkeit im Betrieb der Motoreinrichtung 18 und damit der Erntemaschine insgesamt, welche unerwünscht ist. Aus diesem Grunde ist es, wie bei der soeben beschriebenen Ausführungsform, bevorzugt, dass die Fahrgeschwindigkeit durch die Ansteuerung eines entsprechenden Getriebes in der Leistungsanordnung 2 eingestellt wird, im vorliegenden Fall speziell durch die Ansteuerung des Hydraulikmotors 15 mittels der Hydrauliksteuerung 17, welche hier - wie bereits festgestellt - den Fahrregler bildet.

Allerdings kann über eine Einstellung der Fahrgeschwindigkeit häufig nicht so schnell reagiert werden, dass eine wesentliche Abweichung vom Betriebspunkt 23 stets vermieden werden kann. Daher bietet sich bei starker zu erwartender Inhomogenität die durch die vorliegende Erfindung erst ermöglichte Option an, die Soll-Motordrehzahl 31 so zu wählen, dass diese hinreichend weit über der Drehzahl mit dem maximalen Drehmoment liegt. Auf diese Weise kann die Motoreinrichtung 18 durch eine Verringerung der Drehzahl ausgehend vom Betriebspunkt 23 noch zusätzliches Drehmoment aufbringen, ohne dass eine Änderung des Teillastwerts durch den Motorregler 21 nötig wäre, um ein Abwürgen der Motoreinrichtung 18 zu verhindern. Wird mit nur geringen Inhomogenitäten gerechnet, kann die Soll-Motordrehzahl 31 hingegen vergleichsweise niedriger gewählt werden, wodurch die Effizienz gesteigert wird.

Motiviert aus ähnlichen Überlegungen ist es bevorzugt, dass ein Grenz-Betriebspunkt 33 durch einen Grenz-Teillastwert 34 und eine Grenz-Motordrehzahl 35 definiert ist, und die Regeleinrichtung 22 die Soll-Motordrehzahl 31 nach unten durch die Grenz-Motordrehzahl 35 und einen Teillastwert des Betriebspunktes 23 nach oben auf den Grenz-Teillastwert 34 begrenzt. Mit anderen Worten blockiert die Regeleinrichtung 22 in diesem Fall eine Ansteuerung, welche zu einem Betriebspunkt 23 mit einer Soll-Motordrehzahl 31 unterhalb der Grenz-Motordrehzahl 33 und/oder mit einem Teillastwert oberhalb des Grenz-Teillastwerts 34. Es wird also die Wahlmöglichkeit des Betriebspunkts 23 durch den Bediener im Motorkennfeld eingeschränkt. Der Grund liegt darin, dass ein Betriebspunkt 23 mit einer Drehzahl, welcher zu nahe an der Drehzahl mit dem maximalen Drehmoment liegen würde oder mit einem Teillastwert, welcher keine oder nur geringe Steigerungen des Teillastwerts erlauben würde, zu einer sehr unruhigen Fahrt oder zu einem sehr häufigen Abwürgen der Motoreinrichtung 18 führen würde. Aus der Fig. 2 ist ersichtlich, dass im Grenz-Betriebspunkt 33 einerseits keine Steigerung des Teillastwertes mehr möglich ist, da der Grenz-Betriebspunkt 33 bereits auf der Volllastkennlinie 24 liegt und andererseits nur noch eine geringe Drehmomentsteigerung über eine Reduktion der Drehzahl erreichbar ist, sodass bei einem weitergehenden Drehmomenterfordernis die Motoreinrichtung 18 unweigerlich abgewürgt werden würde. Eine solche Fehleinstellung wird also durch diese bevorzugte Ausgestaltung von vornherein unterbunden.

Hinsichtlich der Ermittlung desjenigen Teillastwerts, welcher den Betriebspunkt 23 definiert, ist bevorzugt vorgesehen, dass die Regeleinrichtung 22 den Teillastwert des Betriebspunkts 23 basierend auf einer Soll-Teillastkennlinie 36 ermittelt, welcher ein Soll-Teillastwert zugeordnet ist, der die Soll-Teillastkennlinie 36 charakterisiert. Und zwar charakterisiert der Soll-Teillastwert die Soll-Teillastkennlinie 36 dergestalt, dass sich aus dem Soll-Teillastwert die Soll-Teillastkennlinie 36 ergibt. Es wird also über eine bekannte oder angenommene Soll-Teillastkennlinie 36 der ebenfalls bekannte und dazugehörige Soll-Teillastwert als Teillastwert des Betriebspunkts 23 angesetzt. Vorzugsweise liegt der der Soll-Teillastkennlinie 36 zugeordnete Soll-Teillastwert unter einem Volllastwert. Da der Betriebspunkt 31 auf der Teillastkennlinie 25 liegt, folgt es, dass diese identisch zu der beispielhaften Soll-Teillastkennlinie 36 ist.

Eine bevorzugte Möglichkeit zur Ermittlung einer solchen Soll-Teillastkennlinie 36 besteht darin, dass die Regeleinrichtung 22 die Soll-Teillastkennlinie 36 aus einer Reihe von hinterlegten Teillastkennlinien auswählt, denen jeweils ein charakterisierender Teillastwert zugeordnet ist.

Hier baut die Regeleinrichtung 22 also darauf, dass schon vorab, entweder durch Messung, Interpolation oder ein sonstiges Verfahren, bekannten Teillastkennlinien bestimmte Teillastwerte zugeordnet wurden. Die Bestimmung der richtigen Teillastkennlinie aus der Reihe der hinterlegten Teillastkennlinien liefert also den entsprechenden Teillastwert, welcher zusammen mit der Soll-Motordrehzahl 31 den Betriebspunkt 23 eindeutig definiert.

Alternativ hierzu kann auch vorgesehen sein, dass die Regeleinrichtung 15 die Soll-Teillastkennlinie 36 basierend auf einer hinterlegten Volllastkennlinie 24 erzeugt. Es ist also keine Reihe von Teillastkennlinien zu einzelnen Teillasten hinterlegt, sondern es wird rechnerisch für eine bestimmte Teillast aus der Volllastkennlinie 24 die entsprechende Teillastkennlinie erzeugt. Eine bevorzugte Variante sieht vor, dass dieses Erzeugen auf einer zumindest abschnittsweisen Parallelverschiebung der hinterlegten Volllastkennlinie 24 beruht. So sind die in der Fig. 2 dargestellten Teillastkennlinien 25-28 vertikale Verschiebungen von Abschnitten der Volllastkennlinie 24. Es ist zu erkennen, dass oberhalb einer bestimmten Drehzahl für jede Teillastkennlinie 25-28 diese mit der Volllastkennlinie 24 wieder zusammenfällt. Eine andere mögliche Herangehensweise wäre eine Interpolation der Volllastkennlinie 24 für jede Drehzahl gemäß dem Anteil bzw. Bruchteil der Teillast an der Volllast.

Ebenso ist es denkbar, dass die Teillastkennlinien 25-28 zumindest abschnittsweise durch eine Polynomfunktion, vorzugsweise durch eine Polynomfunktion zweiter Ordnung, gebildet werden. Eine solche Polynomfunktion könnte etwa für den Drehzahlabschnitt der Fig. 2, für den ein linear fallender Verlauf der Teillastkennlinien 25-28 dargestellt ist, angesetzt werden. Dabei wird bevorzugt für die hinterlegte Volllastkennlinie 24 gemäß der Taylor-Formel eine Polynomfunktion zweiter Ordnung als Approximation ermittelt. Diese hat dann in diesem Drehzahlabschnitt keinen linearen Verlauf, sondern weist vorzugsweise eine positive zweite Ableitung auf. Die Polynomfunktion kann, approximationsbedingt, in einem geringen Umfang auch teilweise einen größeren Wert als die hinterlegte Volllastkennlinie annehmen.

Bevorzugt basiert also das Erzeugen der Soll-Teillastkennlinie 36 durch die Regeleinrichtung 22 auf einer Approximation der hinterlegten Volllastkennlinie 24 und vorzugsweise auf einer zumindest abschnittsweisen Parallelverschiebung einer Approximation der hinterlegten Volllastkennlinie 24. Diese Approximation ist vorzugsweise eine Polynomfunktion zweiter Ordnung. Die Parallelverschiebung entspricht dann einer Anpassung des Absolutglieds der Polynomfunktion.

Eine erste bevorzugte Möglichkeit eines vorschlagsgemäßen Soll-Ertragsparameters sieht nun vor, dass es sich hier um eine Soll-Motorleistung handelt. Unter der Soll-Motorleistung ist hier eine Leistung im physikalischen Sinne zu verstehen. Die Soll-Motorleistung kann entweder absolut oder als prozentualer Anteil der maximalen Leistung der Motoreinrichtung 18 definiert sein.

Eine Weiterbildung dieser bevorzugten Ausführungsform sieht nun vor, dass die Regeleinrichtung 22 aus der Soll-Motorleistung und der Soll-Motordrehzahl 31 einen Soll-Teillastwert ermittelt, wobei die Soll-Motordrehzahl 31 und der Soll-Teillastwert den Betriebspunkt definieren. Dies kann vorzugsweise und wie beschrieben über eine Soll-Teillastkennlinie 36 geschehen, welcher der Soll-Teillastwert zugeordnet ist. Hier ist insbesondere vorgesehen, dass der Soll-Teillastwert bei der Soll-Motordrehzahl 31 einen Drehmomentwert 37 bewirkt, welcher bei der Soll-Motordrehzahl 31 im Wesentlichen zu der Soll-Motorleistung führt.

Es wird also hier bei vorgegebener Soll-Motorleistung und vorgegebener Soll-Motordrehzahl 31 von der Regeleinrichtung 22 eindeutig der für die Soll-Motorleistung bei der Soll-Motordrehzahl 31 erforderliche Drehmomentwert 37 errechnet und damit der Betriebspunkt 23 eindeutig bestimmt. Regelmäßig liegt dieser Betriebspunkt 23 nicht auf, sondern unterhalb der Volllastkennlinie 24, wie es auch im Beispiel der Figur 2 der Fall ist. Ermittelt werden muss nun derjenige Teillastwert, als Stellgröße der Regeleinrichtung 22 hinsichtlich der Motoreinrichtung 18, welcher der Teillastkennlinie 25 durch den Betriebspunkt 23 entspricht. Das ist der Soll-Teillastwert, welcher mittels der bereits beschriebenen bevorzugten Ansätze bestimmt werden kann. Zum Vergleich ist in der Fig. 2 auch der Volllastbetriebspunkt 38 eingetragen, welcher auf der Volllastkennlinie 24 liegt und derselben Motorleistung entspricht. Es ist zu erkennen, dass der Volllastbetriebspunkt 38 in einem deutlich weniger effizienten Bereich des Motorkennfeldes als der leistungsgleiche Betriebspunkt 23 liegt.

Im laufenden Betrieb sorgt nun die Regeleinrichtung 22 dafür, dass über eine Ansteuerung der Arbeitsorgane 3 und des Vortriebsystems 4, wodurch auch die Fahrgeschwindigkeit verändert werden kann, sowie etwaig vorhandener variabler Getriebe, die abgerufene Leistung im Wesentlichen bei der Soll-Motorleistung liegt.

In einer weiteren bevorzugten Ausführungsform ist vorgesehen, dass der Soll-Ernteparameter ein Soll-Erntedurchsatz ist. Der Erntedurchsatz ist hier beispielsweise als Gewicht oder Volumen pro Zeiteinheit definierbar. Für die Regelung des Erntedurchsatzes misst der Durchsatzsensor 22a die Auslenkung der Einzugs- und Vorpresswalzen 7. Hier ist wiederum bevorzugt vorgesehen, dass die Regeleinrichtung 22 aus dem Soll-Erntedurchsatz und der Soll-Motordrehzahl 31 einen Soll-Teillastwert ermittelt, wobei die Soll-Motordrehzahl 31 und der ermittelte Soll-Teillastwert, vorzugsweise über eine Soll-Teillastkennlinie 36, welcher der Soll-Teillastwert zugeordnet ist, den Betriebspunkt 23 definieren. Die prinzipielle Vorgehensweise und auch die Möglichkeiten, die Teillastkennlinien mit ihren zugeordneten Teillastwerten zu bestimmen, entsprechend den bereits vorgestellten diesbezüglichen Möglichkeiten.

Allerdings kann aus dem Soll-Erntedurchsatz regelmäßig nicht in unmittelbarer Weise, wie bei einer Motorleistung in Zusammenschau mit der Soll-Motordrehzahl 31 unmittelbar der geforderte Drehmomentwert 37 im Betriebspunkt 23 ermittelt werden. Vielmehr ist bevorzugt vorgesehen, dass das Ermitteln des Soll-Teillastwertes das Bestimmen eines Mindest-Drehmoments aus dem Soll-Erntedurchsatz umfasst und der Soll-Teillastwert basierend auf dem Mindest-Drehmoment ermittelt wird. Dieses ermittelte Mindest-Drehmoment kann grundsätzlich auch drehzahlabhängig sein.

Das Mindest-Drehmoment kann nun etwa aus dem Soll-Erntedurchsatz mit Hilfe des Ansatzes bestimmt werden, dass der Erntedurchsatz proportional zu einem Produkt aus einer gemessenen Schichthöhe in der Erntemaschine und einer Arbeitsgeschwindigkeit der Arbeitsorgane 3 ist, wobei der Proportionalitätsfaktor von weiteren Parametern wie etwa der Schnittlänge abhängig ist. Regelmäßig wird die Schnittlänge und damit auch die sie bestimmende Arbeitsgeschwindigkeit der Arbeitsorgane 3 aus übergeordneten Erwägungen zum Erntegut vorgegeben. Aus einer gemessenen Schichthöhe kann damit ein Mindest-Drehmoment ermittelt werden, wie nachfolgend beschrieben wird.

Bevorzugt ist, dass das Bestimmen des Mindest-Drehmoments aus dem Soll-Erntedurchsatz mittels einer Adaptionszuordnung vorgenommen wird, welche Adaptionszuordnung einer gemessenen Durchsatzgröße ein jeweiliges Mindest-Drehmoment zuordnet. Vorzugsweise beruht diese Adaptionszuordnung auf einer hinterlegten Adaptionstabelle. Bei der Durchsatzgröße kann es sich um den Erntedurchsatz selbst handeln oder um eine Größe, aus welcher sich der Erntedurchsatz bestimmen lässt. Bevorzugt handelt es sich bei dieser Durchsatzgröße um die obige Schichthöhe.

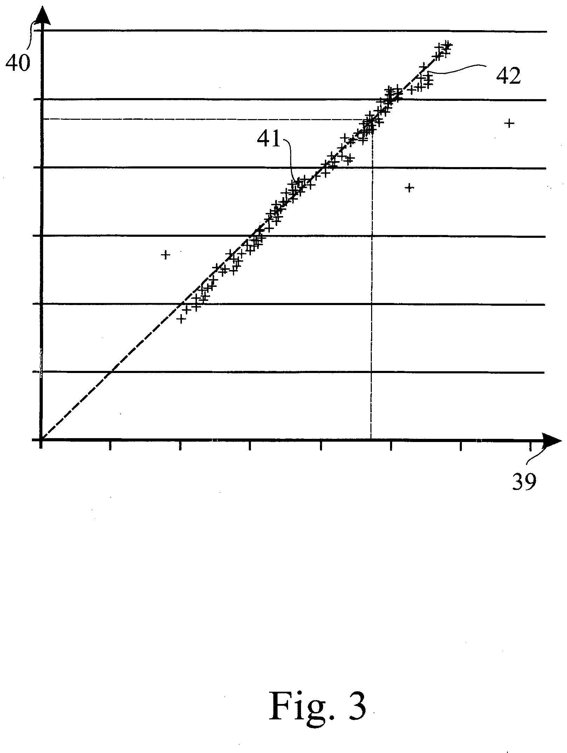

Eine solche Adaptionstabelle ist in der Fig. 3 gezeigt, in welcher entlang der x-Achse 39 eine über einen Sensor gemessene Schichthöhe und entlang der y-Achse 40 das für diese Schichthöhe erforderliche Drehmoment angegeben ist. Aus vielerlei Messpunkten 41 wurde die maßgebliche Gerade 42 ermittelt, welche vorzugsweise laufend durch die Messungen im Betrieb aktualisiert wird und der gemessenen Schichthöhe - welche wie oben beschrieben zum Erntedurchsatz in Bezug gesetzt werden kann - das jeweilige Mindest-Drehmoment zuordnet.

Hier wird also zur Ermittlung des Betriebspunktes 23 einerseits von der Soll-Motordrehzahl 31 ausgegangen, andererseits aus dem Soll-Erntedurchsatz mittelbar durch die Schichthöhe gemäß der Adaptionszuordnung ein Mindest-Drehmoment bestimmt. Der Betriebspunkt 23 liegt nun im Schnittpunkt der Sollmotordrehzahl 31 und des Mindest-Drehmoments, welches hier dem Drehmomentwert 37 entspricht. Bei einem drehzahlabhängigen Mindest-Drehmoment kann der Schnittpunkt mit einer entsprechenden Funktion bzw. Geraden gebildet werden.

Nun wird noch, wie bereits oben stehend beschrieben, mittels einer hinterlegten oder errechneten Teillastkennlinie der Teillastwert bestimmt, welcher bei der Soll-Motordrehzahl 31 das Mindest-Drehmoment ergibt.

Zur Weiterbildung dieser Ausführungsform kann vorgesehen sein, dass die Adaptionszuordnung auch auf Parametereinstellungen der Arbeitsorgane 3 und/oder gemessenen Ernteguteigenschaften und/oder gemessenen Umgebungseigenschaften basiert. Hier ist insbesondere die Schnittlänge relevant. Weiter vorzugsweise aktualisiert die Regeleinrichtung 22 die Adaptionszuordnung zyklisch. Mit anderen Worten kann die Adaptionszuordnung bzw. die Adaptionstabelle ein Mindest-Drehmoment nicht nur als - mittelbare - Funktion des gewünschten Erntedurchsatzes, sondern auch als Funktion (oder als eine Tabelle) dieser weiteren Eingangsgrößen bilden.

So wie sich die relevanten Parametereinstellungen oder Ernteguteigenschaften oder Umgebungseigenschaften ändern, kann auch die aktuell gültige bzw. verwendete Adaptionszuordnung oder Adaptionstabelle entsprechend aktualisiert und variiert werden. Dies bedeutet ggf. dann auch eine Veränderung des Betriebspunktes 23.

Bei den bisher beschriebenen Ausgestaltungen wurde der Betriebspunkt 23 gleichsam analytisch aus der Sollmotordrehzahl 31 und dem Soll-Ertragswert, bei dem es sich insbesondere um eine Soll-Motorleistung oder einen Soll-Erntedurchsatz handeln konnte, bestimmt, und zwar unter Verwendung entweder von hinterlegten oder berechneten Soll-Teillastkennlinien. Bei der Vorgabe eines Soll-Erntedurchsatzes ist es aber auch möglich, dass der Soll-Teillastwert als Gleichgewichts-Teillastwert aus einer Regelung der Motordrehzahl auf die Soll-Motordrehzahl 31 folgt, wobei der Teillastwert erhöht wird, wenn die Motordrehzahl eine untere Drehzahlgrenze 43 unterschreitet, der Teillastwert abgesenkt wird, wenn die Motordrehzahl eine obere Drehzahlgrenze 44 überschreitet und ansonsten der Teillastwert im Wesentlichen gleich bleibt.

Bevorzugt ist hier, um möglichst nahe an der Soll-Motordrehzahl 31 zu bleiben, dass die untere Drehzahlgrenze 43 und die obere Drehzahlgrenze 44 jeweils einen im Wesentlichen gleichen Abstand - gemessen in Hertz - zu der Sollmeterdrehzahl 31 aufweisen.

Hier wird also ein geschätzter Teillastwert vorgegeben und die Motoreinrichtung 18 zunächst bei diesem Teillastwert betrieben. Gleichzeitig ist die Fahrgeschwindigkeit so verstellt, dass der Soll-Erntedurchsatz erreicht wird. Ist das abgegebene Drehmoment zu niedrig für den Soll-Erntedurchsatz, so führt dies zu einer Verringerung der Drehzahl und, sobald diese die untere Drehzahlgrenze 43 unterschreitet, zu einer Erhöhung des Teillastwertes, bis schließlich ein Teillastwert erreicht wird, bei dem die Drehzahl zwischen unterer Drehzahlgrenze 43 und oberer Drehzahlgrenze 44 gehalten wird und damit hinreichend nah an der Soll-Motordrehzahl 31 ist, ohne dass es zu einer weiteren Verstellung des Teillastwertes kommt.

Es ist also ein ähnliches Verfahren, wie es unter dem Begriff "Dynamic Power" bekannt ist, wobei allerdings hier die Soll-Motordrehzahl 31 vorschlagsgemäß nicht unveränderlich durch die Motoreinrichtung 18 vorgegeben ist und grundsätzlich die Erhöhung oder das Absenken der Teillastwerte nicht in Stufen erfolgen muss, sondern auch stufenlos sein kann.

Bevorzugt ist, allerdings, dass die Regeleinrichtung 22 die Motoreinrichtung 18 in einer von einer Mehrzahl von Laststufen betreibt, wobei der Mehrzahl von Laststufen jeweils ein unterschiedlicher Teillastwert zugeordnet ist, dass das Erhöhen des Teillastwerts umfasst, die Motoreinrichtung 18 in eine Laststufe mit einem höheren zugeordneten Teillastwert zu stellen und dass das Absenken des Teillastwerts umfasst, die Motoreinrichtung 18 in eine Laststufe mit einem niedrigeren zugeordneten Teillastwert zu stellen. Vorzugsweise ist hierbei jeder Laststufe eine Teillastkennlinie zugeordnet. Diese bevorzugte Ausführungsform entspricht also der Situation mit einer diskreten Anzahl von Laststufen und damit mit einer diskreten Anzahl von Teillastwerten.

## Patentansprüche

1. Selbstfahrende Erntemaschine umfassend eine Leistungsanordnung (2) mit Arbeitsorganen (3) und einem Vortriebsystem (4), eine Motoreinrichtung (18) zum Treiben der Leistungsanordnung (2), sowie eine Regeleinrichtung (22) zum Ansteuern der Leistungsanordnung (2) und der Motoreinrichtung (18), wobei die Motoreinrichtung (18) in einem durch einen Teillastwert und eine Motordrehzahl definierbaren Betriebspunkt (23) arbeitet,
wobei die Regeleinrichtung (22) in der Weise zur Ansteuerung der Motoreinrichtung (18) und der Leistungsanordnung (2) ausgebildet ist, dass die Motoreinrichtung (18) auf den Betriebspunkt (23) mit einer Soll-Motordrehzahl (31) und eine Ertragsgröße der Erntemaschine auf einen Soll-Ertragswert geregelt wird, wobei die Regeleinrichtung (22) die Leistungsanordnung (2) ansteuert, um die Fahrgeschwindigkeit der Erntemaschine so einzustellen, dass die Motoreinrichtung (18) auf den Betriebspunkt (23) und die Ertragsgröße auf den Soll-Ertragswcrt geregelt wird,
**dadurch gekennzeichnet, dass**
der Bediener die Soll-Motordrehzahl (31) und den Soll-Ertragswert vorgibt.

2. Erntemaschine nach Anspruch 1, **dadurch gekennzeichnet, dass** ein Grenz-Betriebspunkt (33) durch einen Grenz-Teillastwert (34) und eine Grenz-Motordrehzahl (35) definiert ist und die Regeleinrichtung (22) die Soll-Motordrehzahl (31) nach unten durch die Grenz-Motordrehzahl (35) und den Teillastwert des Betriebspunktes (23) nach oben auf den Grenz-Teillastwert (34) begrenzt.

3. Erntemaschine nach einem der Ansprüche 1 bis 2, **dadurch gekennzeichnet, dass** die Regeleinrichtung (22) den Teillastwert des Betriebspunkts (23) basierend auf einer Soll-Teillastkennlinie (36) ermittelt, welcher ein Soll-Teillastwert zugeordnet ist, der die Soll-Teillastkennlinie (36) charakterisiert, vorzugsweise, wobei der der Soll-Teillastkennlinie (36) zugeordnete Soll-Teillastwert unter einem Volllastwert liegt.

4. Erntemaschine nach Anspruch 3, **dadurch gekennzeichnet, dass** die Regeleinrichtung (22) die Soll-Teillastkennlinie (36) aus einer Reihe von hinterlegten Teillastkennlinien auswählt, denen jeweils ein charakterisierender Teillastwert zugeordnet ist.

5. Erntemaschine nach Anspruch 3, **dadurch gekennzeichnet, dass** die Regeleinrichtung (22) die Soll-Teillastkennlinie (36) basierend auf einer hinterlegten Volllastkennlinie (24) und/oder basierend auf einer Approximation der hinterlegten Volllastkennlinie (24) erzeugt, vorzugsweise, basierend auf einer zumindest abschnittsweisen Parallelverschiebung der hinterlegten Volllastkennlinie (24) und/oder basierend auf einer zumindest abschnittsweisen Parallelverschiebung einer Approximation der hinterlegten Volllastkennlinie (24) erzeugt.

6. Erntemaschine nach einem der Ansprüche 1 bis 5, **dadurch gekennzeichnet, dass** der Soll-Ertragswert eine Soll-Motorleistung ist.

7. Erntemaschine nach Anspruch 6, **dadurch gekennzeichnet, dass** die Regeleinrichtung (22) aus der Soll-Motorleistung und der Soll-Motordrehzahl (31) einen Soll-Teillastwert ermittelt, wobei die Soll-Motordrehzahl (31) und der Soll-Teillastwert, vorzugsweise über eine Soll-Teillastkennlinie (36), welcher der Soll-Teillastwert zugeordnet ist, den Betriebspunkt (23) definieren, insbesondere, wobei der Soll-Teillastwert bei der Soll-Motordrehzahl (31) einen Drehmomentwert (37) bewirkt, welcher bei der Soll-Motordrehzahl (31) im Wesentlichen zu der Soll-Motorleistung führt.

8. Erntemaschine nach einem der Ansprüche 1 bis 5, **dadurch gekennzeichnet, dass** der Soll- Ertragswert ein Soll-Erntedurchsatz ist.

9. Erntemaschine nach Anspruch 8, **dadurch gekennzeichnet, dass** die Regeleinrichtung (22) aus dem Soll-Erntedurchsatz und der Soll-Motordrehzahl (31) einen Soll-Teillastwert ermittelt, wobei die Soll-Motordrehzahl (31) und der ermittelte Soll-Teillastwert, vorzugsweise über eine Soll-Teillastkennlinie (36), welcher der Soll-Teillastwert zugeordnet ist, den Betriebspunkt (23) definieren.

10. Erntemaschine nach Anspruch 9, **dadurch gekennzeichnet, dass** das Ermitteln des Soll-Teillastwerts das Bestimmen eines Mindest-Drehmoments aus dem Soll-Erntedurchsatz umfasst und der Soll-Teillastwert basierend auf dem Mindest-Drehmoment ermittelt wird.

11. Erntemaschine nach Anspruch 10, **dadurch gekennzeichnet, dass** das Bestimmen des Mindest-Drehmoments aus dem Soll-Erntedurchsatz mittels einer Adaptionszuordnung vorgenommen wird, welche Adaptionszuordnung einer gemessenen Durchsatzgröße ein jeweiliges Mindest-Drehmoment zuordnet, vorzugsweise, wobei die Adaptionszuordnung auf einer hinterlegten Adaptionstabelle beruht.

12. Erntemaschine nach Anspruch 11, **dadurch gekennzeichnet, dass** die Adaptionszuordnung auch auf Parametereinstellungen der Arbeitsorgane (3) und/oder gemessenen Ernteguteigenschaften und/oder gemessenen Umgebungseigenschaften basiert, vorzugsweise, dass die Regeleinrichtung (22) die Adaptionszuordnung zyklisch aktualisiert.

13. Erntemaschine nach Anspruch 8, **dadurch gekennzeichnet, dass** der Soll-Teillastwert als Gleichgewichts-Teillastwert aus einer Regelung der Motordrehzahl auf die Soll-Motordrehzahl (31) folgt, wobei der Teillastwert erhöht wird, wenn die Motordrehzahl eine untere Drehzahlgrenze (43) unterschreitet, der Teillastwert abgesenkt wird, wenn die Motordrehzahl eine obere Drehzahlgrenze (44) überschreitet und ansonsten der Teillastwert im Wesentlichen gleich bleibt, vorzugsweise, wobei die untere Drehzahlgrenze (43) und die obere Drehzahlgrenze (44) jeweils einen im Wesentlichen gleichen Abstand zu der Soll-Motordrehzahl (31) aufweisen.

14. Erntemaschine nach Anspruch 13, **dadurch gekennzeichnet, dass** die Regeleinrichtung (22) die Motoreinrichtung (18) in einer von einer Mehrzahl von Laststufen betreibt, wobei der Mehrzahl von Laststufen jeweils ein unterschiedlicher Teillastwert zugeordnet ist, dass das Erhöhen des Teillastwerts umfasst, die Motoreinrichtung (18) in eine Laststufe mit einem höheren zugeordneten Teillastwert zu stellen und dass das Absenken des Teillastwerts umfasst, die Motoreinrichtung (18) in eine Laststufe mit einem niedrigeren zugeordneten Teillastwert zu stellen, vorzugsweise, wobei jeder Laststufe eine Teillastkennlinie zugeordnet ist.

## Claims

1. A self-propelled harvester including a power arrangement (2) having drive members (3) and a propulsion system (4), an engine device (18) for driving the power arrangement (2), and a regulating device (22) for actuating the power arrangement (2) and the engine device (18), wherein the engine device (18) works in an operating point (23) which can be defined by a part-load value and an engine speed,
wherein the regulating device (22) is so adapted to actuate the engine device (18) and the power arrangement (2) that the engine device (18) is regulated to the operating point (23) with a target engine speed (31) and a yield amount of the harvester is regulated to a target yield value, wherein the regulating device (22) actuates the power arrangement (2) to set the travel speed of the harvester in such a way that the engine device (18) is regulated to the operating point (23) and the yield is regulated to the target yield value
**characterised in that**
the operator presets the target engine speed (31) and the target yield value.

2. A harvester according to claim 1 **characterised in that** a limit operating point (33) is defined by a limit part-load value (34) and a limit engine speed (35) and the regulating device (22) delimits the target engine speed (31) downwardly by the limit engine speed (35) and a part-load value of the operating point (23) upwardly to the limit part-load value (34).

3. A harvester according to one of claims 1 and 2 **characterised in that** the regulating device (22) ascertains the part-load value of the operating point (23) based on a target part-load characteristic (36) with which there is associated a target part-load value which characterises the target part-load characteristic (36), and preferably wherein the target part-load value associated with the target part-load characteristic (36) is below a full-load value.

4. A harvester according to claim 3 **characterised in that** the regulating device (22) selects the target part-load characteristic (36) from a series of stored part-load characteristics, with each of which there is associated a respective characterising part-load value.

5. A harvester according to claim 3 **characterised in that** the regulating device (22) produces the target part-load characteristic (36) based on a stored full-load characteristic (24) and/or based on an approximation of the stored full-load characteristic (24), preferably based on an at least portion-wise parallel shift of the stored full-load characteristic (24) and/or based on an at least portion-wise parallel shift of an approximation of the stored full-load characteristic (24).

6. A harvester according to one of claims 1 to 5 **characterised in that** the target yield value is a target engine power output.

7. A harvester according to claim 6 **characterised in that** the regulating device (22) ascertains a target part-load value from the target engine power output and the target engine speed (31), wherein the target engine speed (31) and the target part-load value define the operating point (23) preferably by way of a target part-load characteristic (36) with which the target part-load value is associated, and in particular wherein the target part-load value at the target engine speed (31) produces a torque value (37) which at the target engine speed (31) leads substantially to the target engine power output.

8. A harvester according to one of claims 1 to 5 **characterised in that** the target crop parameter is a target crop throughput.

9. A harvester according to claim 8 **characterised in that** the regulating device (22) ascertains a target part-load value from the target crop throughput and the target engine speed (31), wherein the target engine speed (31) and the ascertained target part-load value define the operating point (23), preferably by way of a target part-load characteristic (36) with which the target part-load value is associated.

10. A harvester according to claim 9 **characterised in that** the operation of ascertaining the target part-load value includes determining a minimum torque from the target crop throughput and the target part-load value is ascertained based on the minimum torque.

11. A harvester according to claim 10 **characterised in that** the operation of determining the minimum torque from the target crop throughput is effected by means of an adaptation association, which adaptation association associates a respective minimum torque with a measured throughput magnitude, wherein the adaptation association is based on a stored adaptation table.

12. A harvester according to claim 11 **characterised in that** the adaptation association is also based on parameter settings of the working members (3) and/or measured crop properties and/or measured environmental properties, and preferably that the regulating device (22) cyclically updates the adaptation association.

13. A harvester according to claim 8 **characterised in that** the target part-load value as an equilibrium part-load value follows from a control of the engine speed to the target engine speed (31), wherein the part-load value is increased if the engine speed falls below a lower speed limit (43), the part-load value is reduced if the engine speed exceeds an upper speed limit (44) and otherwise the part-load value remains substantially the same, and preferably wherein the lower speed limit (43) and the upper speed limit (44) respectively involve a substantially identical spacing relative to the target engine speed (31).

14. A harvester according to claim 13 **characterised in that** the regulating device (22) operates the engine device (18) in one of a plurality of load stages, wherein a respective different part-load value is associated with the plurality of load stages, increasing the part-load value includes setting the engine device (18) in a load stage with a higher associated part-load value and reducing the part-load value includes setting the engine device (18) in a load stage with a lower associated part-load value, and preferably wherein a part-load characteristic is associated with each load stage.

## Revendications

1. Machine de récolte automotrice comprenant un agencement fonctionnel (2) avec des organes de travail (3) et un système de propulsion (4), un équipement moteur (18) pour entraîner l'agencement fonctionnel (2) ainsi qu'un équipement de régulation (22) pour commander l'agencement fonctionnel (2) et l'équipement moteur (18), l'équipement moteur (18) fonctionnant à un point de fonctionnement (23) définissable par une valeur de charge partielle et par un régime-moteur, l'équipement de régulation (22) étant conçu pour commander l'équipement moteur (18) et l'agencement fonctionnel (2) de façon que l'équipement moteur (18) soit régulé au point de fonctionnement (23) avec un régime-moteur de consigne (31) et qu'une grandeur de rendement de la machine de récolte soit régulée à une valeur de rendement de consigne, l'équipement de régulation (22) commandant l'agencement fonctionnel (2) pour régler la vitesse de marche de la machine de récolte de façon que l'équipement moteur (18) soit régulé au point de fonctionnement (23) et que la grandeur de rendement le soit à la valeur de rendement de consigne, **caractérisée en ce que** l'utilisateur prescrit le régime-moteur de consigne (31) et la valeur de rendement de consigne.

2. Machine de récolte selon la revendication 1, **caractérisée en ce qu'**un point de fonctionnement limite (33) est défini par une valeur de charge partielle limite (34) et par un régime-moteur limite (35), et l'équipement de régulation (22) limite le régime-moteur de consigne (31) vers le bas par l'intermédiaire du régime-moteur limite (35) et limite la valeur de charge partielle du point de fonctionnement (23) vers le haut à la valeur de charge partielle limite (34).

3. Machine de récolte selon une des revendications 1 à 2, **caractérisée en ce que** l'équipement de régulation (22) détermine la valeur de charge partielle du point de fonctionnement (23) sur la base d'une courbe caractéristique de charge partielle de consigne (36) à laquelle est associée une valeur de charge partielle de consigne qui caractérise de préférence la courbe caractéristique de charge partielle de consigne (36), la valeur de charge partielle de consigne associée à la courbe caractéristique de charge partielle de consigne (36) étant inférieure à une valeur de pleine charge.

4. Machine de récolte selon la revendication 3, **caractérisée en ce que** l'équipement de régulation (22) sélectionne la courbe caractéristique de charge partielle de consigne (36) parmi une série de courbes caractéristiques de charge partielle enregistrées, à chacune desquelles est associée une valeur de charge partielle caractérisante.

5. Machine de récolte selon la revendication 3, **caractérisée en ce que** l'équipement de régulation (22) génère la courbe caractéristique de charge partielle de consigne (36) de préférence sur la base d'une courbe caractéristique de pleine charge enregistrée (24) et/ou sur la base d'une approximation de la courbe caractéristique de pleine charge enregistrée (24), sur la base d'un déplacement parallèle, au moins par endroits, de la courbe caractéristique de pleine charge enregistrée (24) et/ou sur la base d'un déplacement parallèle, au moins par endroits, d'une approximation de la courbe caractéristique de pleine charge enregistrée (24).

6. Machine de récolte selon une des revendications 1 à 5, **caractérisée en ce que** la valeur de rendement de consigne est une puissance moteur de consigne.

7. Machine de récolte selon la revendication 6, **caractérisée en ce que** l'équipement de régulation (22) détermine, à partir de la puissance moteur de consigne et du régime-moteur de consigne (31), une valeur de charge partielle de consigne, le régime-moteur de consigne (31) et la valeur de charge partielle de consigne définissant en particulier le point de fonctionnement (23), de préférence par l'intermédiaire d'une courbe caractéristique de charge partielle de consigne (36) à laquelle est associée la valeur de charge partielle de consigne, la valeur de charge partielle de consigne produisant au régime-moteur de consigne (31) une valeur de couple de rotation (37) qui, au régime-moteur de consigne (31), conduit sensiblement à la puissance moteur de consigne.

8. Machine de récolte selon une des revendications 1 à 5, **caractérisée en ce que** la valeur de rendement de consigne est un débit de récolte de consigne.

9. Machine de récolte selon la revendication 8, **caractérisé en ce que** l'équipement de régulation (22) détermine, à partir du débit de récolte de consigne et du régime-moteur de consigne (31), une valeur de charge partielle de consigne, le régime-moteur de consigne (31) et la valeur de charge partielle de consigne déterminée définissant le point de fonctionnement (23), de préférence par l'intermédiaire d'une courbe caractéristique de charge partielle de consigne (36) à laquelle est associée la valeur de charge partielle de consigne.

10. Machine de récolte selon la revendication 9, **caractérisée en ce que** la détermination de la valeur de charge partielle de consigne comprend le calcul d'un couple de rotation minimal à partir du débit de récolte de consigne, et la valeur de charge partielle de consigne est déterminée sur la base du couple de rotation minimal.

11. Machine de récolte selon la revendication 10, **caractérisée en ce que** le calcul du couple de rotation minimal est réalisé à partir du débit de récolte de consigne au moyen d'une association adaptative, ladite association adaptative associant de préférence à une grandeur de débit mesurée un couple de rotation minimal correspondant, l'association adaptative reposant sur une table d'adaptation enregistrée.

12. Machine de récolte selon la revendication 11, **caractérisée en ce que** l'association adaptative est également basée de préférence sur des réglages paramétriques des organes de travail (3) et/ou des propriétés mesurées de la récolte et/ou des propriétés mesurées de l'environnement, **en ce que** l'équipement de régulation (22) actualise cycliquement l'association adaptative.

13. Machine de récolte selon la revendication 8, **caractérisée en ce que** la valeur de charge partielle de consigne résulte, en tant que valeur de charge partielle d'équilibre, d'un réglage du régime-moteur au régime-moteur de consigne (31), la valeur de charge partielle étant augmentée quand le régime-moteur soupasse une limite de régime inférieure (43), la valeur de charge partielle étant abaissée quand le régime-moteur excède une limite de régime supérieure (44) et, sinon, la valeur de charge partielle restant de préférence sensiblement égale, la limite de régime inférieure (43) et la limite de régime supérieure (44) présentant chacune un écart sensiblement égal par rapport au régime-moteur de consigne (31).

14. Machine de récolte selon la revendication 13, **caractérisée en ce que** l'équipement de régulation (22) exploite l'équipement moteur (18) dans une d'une pluralité de plages de charge, à la pluralité de plages de charge étant associée à chaque fois une valeur de charge partielle différente, **en ce que** l'augmentation de la valeur de charge partielle consiste à amener l'équipement moteur (18) dans une plage de charge avec une valeur de charge partielle associée supérieure, et **en ce que**, de préférence, l'abaissement de la valeur de charge partielle consiste à amener l'équipement moteur (18) dans une plage de charge avec une valeur de charge partielle associée inférieure, à chaque plage de charge étant associée une courbe caractéristique de charge partielle.
